Europäisches Patentamt

European Patent Office

Office européen des brevets

(19)

(11) Publication number: **0 081 775**
**B1**

(12) **EUROPEAN PATENT SPECIFICATION**

(45) Date of publication of patent specification: **09.04.86**

(21) Application number: **82111234.9**

(22) Date of filing: **04.12.82**

(51) Int. Cl.⁴: **C 04 B 35/56,** B 24 D 3/06,
B 23 B 27/14

(54) **Nitrided superhard composite material.**

(30) Priority: **16.12.81 US 331374**
**16.12.81 US 331370**
**16.12.81 US 331381**
**16.12.81 US 331380**
**27.01.82 US 343344**

(43) Date of publication of application:
**22.06.83 Bulletin 83/25**

(45) Publication of the grant of the patent:
**09.04.86 Bulletin 86/15**

(84) Designated Contracting States:
**AT BE CH DE FR GB IT LI NL SE**

(56) References cited:
**EP-A-0 012 966**
**EP-A-0 019 461**
**EP-A-0 043 542**
**EP-A-0 056 945**
**US-A-2 839 413**
**US-A-3 291 623**
**US-A-3 369 283**
**US-A-4 159 885**

(73) Proprietor: **GENERAL ELECTRIC COMPANY**
**1 River Road**
**Schenectady New York 12305 (US)**

(72) Inventor: **Ohno, John Michio**
**11650 McClumpha Road**
**Plymouth Michigan 48170 (US)**

(74) Representative: **Sieb, Rolf, Dr. et al**
**European Patent Attorney Kaiserstrasse 41**
**D-6000 Frankfurt (Main) 1 (DE)**

EP 0 081 775 B1

Courier Press, Leamington Spa, England.

## Description

Background of the invention

Articles composed of materials having refractory characteristics of hardness and resistance to erosion have myriad important uses. Reaction sintering of α-silicon carbide and β-silicon carbide has been known for making high temperature components. For example, β-silicon carbide is described as an excellent binder in U.S. Patent No. 2,938,807 Anderson.

Another useful component of these materials would be superhard crystals such as diamond and cubic boron nitride. Their superior properties, for example hardness, have long been appreciated. A satisfactory means of incorporating diamond for example into such materials would be of a significant advantage and is an object of the process and poduct of the present invention.

In the area of bonding diamond crystals, certain metals have been employed together with hot-press technology, as for example described in U.S. Patents Nos. 4,124,401 Lee et al, 4,167,399 Lee et al, and 4,173,614 Lee et al, all assigned to the assignee of the present invention.

Some prior processes have been improved by the inventon · disclosed in EP—A—43 541, published January 13, 1982 (inventor is: John Michio Ohno).

The Ohno application describes bi-layer diamond composites having a special binder of β-silicon carbide. That binder forms a matrix throughout the composite so as both to hold the diamond crystals and to unite the composite layers. The composites are formed by a process comprising:

(a) forming a first dispersion of diamond crystals and carbon black in paraffin;

(b) forming a second dispersion of carbon fiber, carbon black and filler in paraffin;

(c) compacting said dispersions together to produce an integral bi-layer composite;

(d) subjecting said composite to a vacuum for a period of time at a temperature sufficient to vaporize essentially all of said paraffin;

(e) liquefying said silicon to cause infiltration into both layers;

(f) uniting the layers of said composite with liquid silicon; and

(g) sintering the composite and infiltrated silicon under conditions sufficient to produce a β-silicon carbide binder uniting said composite.

Superhard crystals such as diamond crystals and crystals of cubic boron nitride are expensive items compared to carbide and other materials used in the cutting edges of metal cutting tools. Moreover, the use of additive materials including superhard crystals entailed a rather wide distribution of crystals within the matrix so that a great number of crystals never take part in the cutting action. The above Ohno process, known as the press and treat technique, provides a means of segregating the crystals into defined areas such as discs and trianguloid configurations with the results that the total quantity of superhard crystals is reduced.

In EP—A—12966, published July 9, 1980, there is described a process for preparing a bonded composite cutting element comprising:

(a) forming a compact which comprises superhard crystals and non-diamond carbon,

(b) infiltrating said compact with liquid silicon, and

(c) sintering the compact containing infiltrated silicon under conditions sufficient to produce a β-silicon carbide binder uniting said composite.

In said process the non-diamond carbon may be obtained from a decomposable organic compound present in said compact. Also, said EP—A does not disclose carbon black as being a useful non-diamond carbon.

In US—A—4,159,885 there is described a cutting tool insert including hard materials such as cemented hard metal carbides, ceramics and diamond particles. The diamond particles may be embedded, for example, in a recess which is present at least in the top surface of a plate of a single hard material being part of said insert. The making of such an insert apparently is a rather expensive operation for there is to be cut said at least one recess into said hard material plate.

Summary of the invention

It has now been discovered that the compact with smaller volumes of superhard crystals concentrated in predetermined and perhaps spaced relationships is structurally improved by subjecting the compact to a nitriding process to convert the elemental silicon, from the infiltration step, into silicon nitride. The improved process permits the manufacture of high strength cutting tool inserts having more discrete concentrations of superhard crystals at predetermined locations, such as a triangular concentration near the edge of an insert. These inserts use a lesser amount of superhard crystals and are, therefore, more economical. Means are provided for securing these unique inserts in appropriate tool holders.

The drawings

This invention will be better understood when taken in connection with the following description and the drawings, in which:

Fig. 1 is a schematic diagram of the process of the present invention;

Figs. 2—6 are sequential, illustrative depictions of a preferred process and particular apparatus useful in the process of the present invention;

Fig. 7 illustrates a composite insert having an overlay of superhard crystals with geometrical raised corner portions;

Fig. 8 illustrates a composite insert where superhard corner portions extend in plural directions from the composite;

Fig. 9 illustrates a composite with a recessed upper surface to contain a clamping plate;

Fig. 10 illustrates a circular composite having a triangular cross section edge with a gradation layer;

Fig. 11 illustrates a clamping washer means for a composite;

Fig. 12 illustrates a stress distributing device in a composite clamping means;

Fig. 13 illustrates a thin composite with an envelope structure of superhard crystals; and

## Description of the invention

The process of the present invention is characterized by the steps of:

(i) forming a first dispersion of superhard crystals and carbon black in paraffin;

(ii) forming a second dispersion of carbon fiber, carbon black and filler in paraffin;

(iii) compacting one of said dispersions to produce a physically stable intermediate compact;

(iv) recompacting said intermediate compact with the remaining dispersion to produce a binary compact;

(v) subjecting said binary compact to a vacuum for a period of time at a temperature sufficient to vaporize essentially all of said paraffin;

(vi) infiltrating said compact with liquid silicon;

(vii) sintering the compact; and then

(viii) subjecting the sintered compact to a nitriding treatment to convert elemental silicon to silicon nitride.

As a result of this process, a bonded composite having a superior wear resistance surface layer is produced. When diamond crystals are used, the diamond crystal containing surface, held tightly by a strong silicon carbide bonding matrix, is particularly suitable as a tooling or cutting edge.

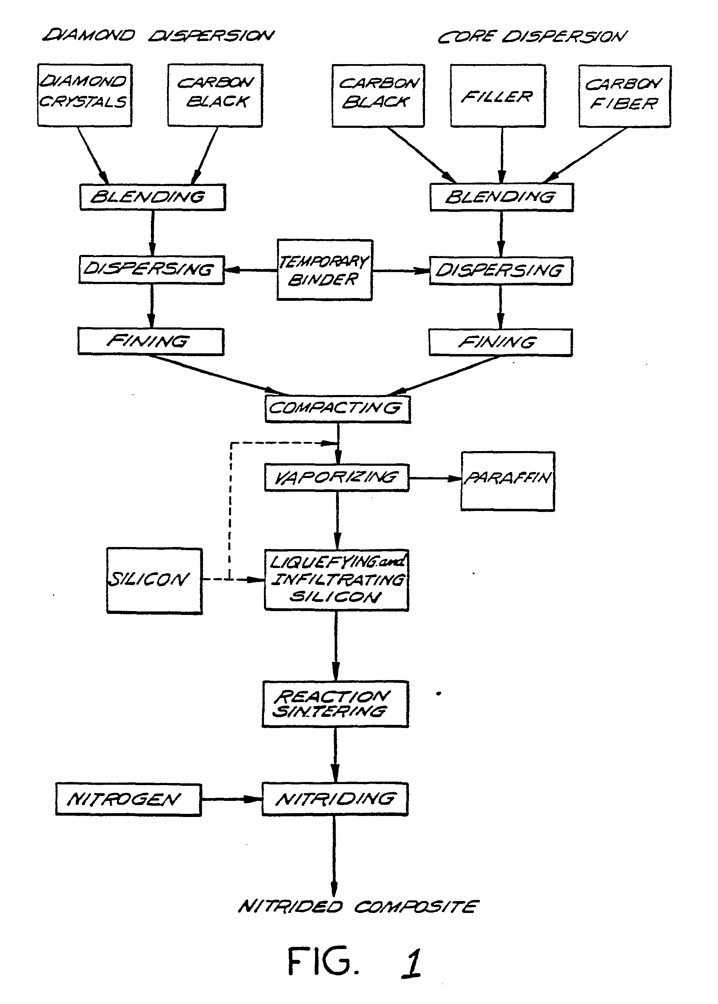

The present process for preparing silicon carbide composites is diagrammed in representative manner in Fig. 1. As shown by that diagram, one of the initial steps involves the formation of a dispersion of diamond crystals and carbon black in paraffin. For various reasons, small crystals are usually employed in this first dispersion. In a preferred embodiment, the diamonds employed include crystals having a size less than 400 mesh (0.037 mm). Crystals of this preferred size will, when bonded with β-silicon carbide, exhibit superior resistance to chipping. In addition, they provide sharp edges having desirable relief angles for cutting inserts and other wear components.

To the diamond crystals must be added carbon black. This carbon serves subsequently by reacting to yield β-silicon carbide for the bonding matrix of the present composites. This carbon black is desirably of high purity to reduce the presence of contaminants. In particular, its sulfur content should be low to avoid possible side reactions during subsequent processing. Although varying amounts of carbon black are permissible, from 1% to 3%, most preferably about 2%, by weight of diamond has proven optimum.

The paraffin utilized in the first (or peripheral) dispersion may be any of the hydrocarbon waxes encompassed by the common meaning of this term. Again a high purity hydrocarbon should be employed to avoid possible harmful residue. For each of admixture, a liquid paraffin is employed. This may, however, be accomplished by operating under a temperature sufficiently high to melt a paraffin which is ordinarily solid under ambient conditions. The amount of paraffin employed is not critical as it is subsequently removed. It generally constitutes from 3% to 6% by total weight of the first dispersion.

The foregoing constituents may simply be mixed together to form the first dispersion. A very intimate and homogeneous dispersion is, however, preferred. Consequently, a step-wise technique such as that outlined in the flow diagram of Fig. 1 is desirable.

In accordance with that technique, the diamond crystal and carbon black are blended to permit an even coating of the crystal surfaces. Only after this step is the paraffin mixed into the blend. Thereafter, the first dispersion is preferably subjected to a further step of fining, as by grinding. However, the admixture of the second dispersion containing carbon fiber, carbon black, and paraffin may be passed through a screen of, for example, about 20 mesh (0.84 mm) to improve admixture and reduce any agglomeration which may have occured.

The paraffin and carbon black utilized in the second (or core) dispersion of the process may be any of these previously described. For convenience, the same ones are ordinarily utilized in forming both the first and second dispersions. Generally, the second dispersion also contains from 3% to 6% paraffin and 2% to 4% carbon black by weight. The amount of carbon black, particularly in the first dispersion, the quality and type of carbon black, are also critical. For example, sulfur contamination in carbon black must be avoided.

The carbon fiber employed is desirably of very small size to facilitate homogenous admixture and, in particular, the fining operation. The sizes of fiber are preferably of from 6 to 30 μm in diameter, and from 250 to 500 μm in length.

The filler is provided to increase bulk and also to improve the compressibility of the powder mix containing fiber. It is highly desirable for a number of applications. Although such a filler may comprise any material which is stable under the ocnditions to which it is subjected during sintering and use, fine or silicon carbide is preferred. Ordinarily, from 40% to 75% of filler by total weight of the second dispersion is employed.

As is the case in production of the first dispersion, the paraffin, carbon black, carbon fiber and filler should be intimately admixed. They are also desirably screened as previously described to insure fineness.

Due to the presence of paraffin, each dispersion is independently capable of being compacted (or molded) to desired shape(s). Application of pressure provides a compacted dispersion with sufficient "green strength" or physical stability to retain its imparted shape during subsequent operations and/or handling. The amount of pressure applied may vary widely, although at least 226 N/mm² (2300 kg/cm²) is preferred.

In the process of this invention one or the other of the two dispersions is compacted to form that portion of the composite with which it will ultimately correspond. This compacted dispersion therefore constitutes an intermediate compact identical in shape and volume (but not composition) with a portion—such as a core, cutting edge or the like—of the final composite.

After the intermediate compact has been formed from one dispersion, it may be recompacted with the remaining dispersion. For this step, the intermediate compact may be positioned where desired within a mold having the shape of the desired composite. The remaining dispersion may then be added to the mold to complete filling. One dispersion must be compacted in each of the foregoing steps, but their sequence is not important. The application of pressure as previously described then yields a physically stable binary compact which has the same shape as the ultimate bonded composite.

An item of importance in these operations is the shape(s) of the mold(s). A significant advantage of the present invention lies in the fact that a shape impressed upon a compact during molding ordinarily need not subsequently be altered. Thus the time consuming and difficult steps of grinding and finishing to a desired shape, common with other refractory materials, may be eliminated in accordance with the present process, the mold(s) and/or plunger(s) should therefore have the configuration(s) desired for the ultimate portion of the body to which the compact or composite corresponds.

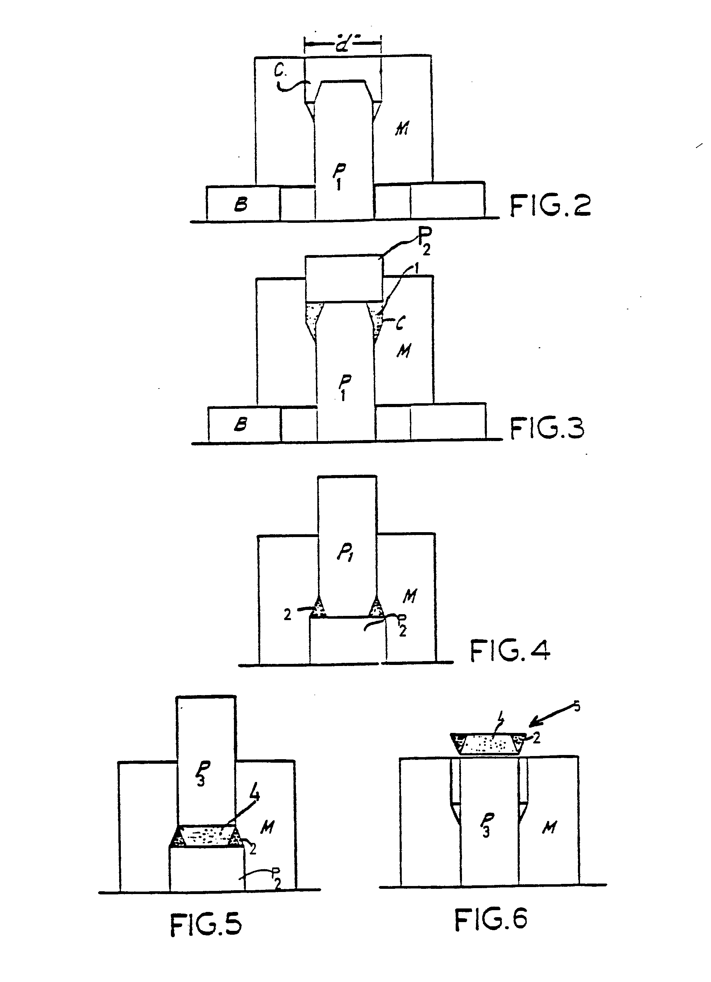

In Figs. 2—6 there is shown a molding apparatus and the sequence of events. The apparatus comprises a base B, a mold M defining a cavity C and a plunger $P_1$. Plunger $P_1$ fits into the mold M and cavity C to closely define the final shape of an insert or compact. Insert material 1, Fig. 3, is introduced into the cavity and a block plunger $P_2$ is used to close the cavity and to compact the material 1 into the annular shape 2 shown in Fig. 4. In Fig. 5 the plunger $P_3$ has a flat face and annular insert 2 has been filled with the remaining dispersion 4. Upon completion of the compacting process, Fig. 6, the composite 5 is removed for sintering. Once molded to the desired shape, the binary compact is (as may be seen in Fig. 1) subjected to vacuum and temparature conditions sufficient to vaporize the paraffin from its entire volume. Suitable conditions are, of course, dependent upon the particular paraffin present. Generally, however, a pressure of less than $2,6 \cdot 10^{-4}$ bar(0,2 mm Hg) and temperature of about 500°C are utilized. Alternatively, another temperature and a correspondingly varied vacuum may be employed.

The vaporization of the paraffin is preferably conducted slowly. This avoids, for example, violent boiling and/or build-up of gaseous pressure within the composite. Accordingly, conditions requiring at least 10 minutes and preferably from 10 to 15 minutes for the essentially complete removal of the paraffin are preferred.

The compact is next infiltrated with liquid silicon. There must be sufficient elemental silicon present to permit, under the conditions of sintering, infiltration of silicon to, and reaction with, substantially all of the carbon black and carbon fiber of the compact. There may also be excess silicon. It is not detrimental if, after sintering, a small amount of free silicon remains within the resultant composite. Up to about 14%, preferably from 5% to 12%, excess silicon is even desirable to ensure substantially complete reaction.

The operation of bonding a compact to create a composite actually involves a series of steps, all of which may occur essentially simultaneously. These steps include melting of the silicon, infiltration of molten silicon into the compact and reaction of infiltrated silicon with both the carbon black and carbon fiber to produce β-silicon carbide through the resultant composite.

To induce this last set of reactions between silicon and carbon, a minimum temperature of at least about 1450°C is required. Higher temperatures may also be utilized. A maximum of about 1490°C is, however, preferred to avoid graphitization of the diamond crystals. Normally the compact should be maintained at a temperature within this range for at least 10 minutes at 1490°C, preferably at least 30 minutes at 1450—1490°C. This ensures substantially complete reaction of available carbon black and carbon fiber with infiltrated silicon. Consequently, the entire operation may proceed essentially simultaneously under a single set of conditions or in a sequential, step-wise progression, as desired.

The process of the present invention does not require application of pressure during silicon infiltration or sintering. This, of course, means that there is no need for a hot press mold at this stage of the present process. Such other processes as are, for example, described in United States Letters Patent No. 4,124,401 of Lee et al, rely upon a pressure upwards of 138 N/mm² (20,000 psi) for this portion of the process.

Once reaction between carbon black and carbon fiber with silicon has essentially ceased, the bonded product composite may be cooled. If, as desired, the composite was formed in the desired shape, it is ready for use after the nitriding step. Most commonly, therefore, it will be configured as a cutting tool, wire drawing die or other conventional article for which its properties are particularly desirable.

These bonded composites generally contain strata which evidence their process of production. In the main, the strata are evidenced by the filler of the second dispersion (or core) and by the diamond crystals on its surface. Uniting these different strata is the bonding matrix of β-silicon

carbide. Thus, for example, if the filler of the second dispersion is β-silicon carbide, as preferred, that layer may consist essentially of α- and β-silicon carbide. A residue of unreacted constituents—generally from about 5% to 14% silicon and up to about 0.2% carbon by weight—may also exist. The silicon residue may be present throughout the composite. However, residual carbon in the portion derived from the first dispersion must be less than 0.05% by weight.

The peripheral side surface portion 2, Fig. 5, derived from the first dispersion ordinarily consists predominantly of diamond crystals and a small amount of β-silicon carbide. Most characteristic of this layer is the presence of its diamond crystals, preferably in the range of from about 75% to 90% by weight.

The composites of the present invention are improved by a nitriding treatment. In this treatment a nitrogen insertion step is shown where nitrogen is caused to flow into the vacuum furnace to convert the remaining elemental silicon to silicon nitride. In one example of this step nitrogen is caused to flow into the furnace at a temperature above about 1100°C for an hour or less to cause surface nitriding with the production of amorphous $Si_3N_4$. Prior to this step hydrogen and/or nitrogen may be flushed to reduce the furnace environment. A self clogging process prevents additional nitrogen from penetrating deeply into the insert and providing a surface like treatment only.

The present invention merely requires the injection of nitrogen gas into the furnace and is therefore straightforward, inexpensive, readily lends itself to automated procedures, and is essentially pollution free. Further, neither high temperature nor high pressure techniques are employed as in the prior art, thus producing amorphous $Si_3N_4$, rather than conventional $Si_3N_4$. Although the hardness of amorphous $Si_3N_4$ is lower than that of conventional $Si_3N_4$, it has the advantage of providing a protective layer which both eliminates buildup of Al-Si alloy on the insert when cutting these materials, a further densification of the surface of the insert, a hardening of the binder phase, a 20 to 40% increase in the bending strength of the insert and an increased wear-resistance.

The present shaped composites may have any of the geometric shapes known for such cutting tool inserts. In general, these inserts share an indexable feature that, during use, they are rotated about a central axis while their circumferential working sides or edges are oriented either parallel to, or intersecting, that axis. Certain preferred embodiments of the present invention involve some of these shapes. For example, the insert 5 of Fig. 6 may have two essentially parallel and planar surfaces spaced a predetermined distance apart. These surfaces would represent the anterior and posterior surfaces of the insert, their distance of separation, its depth, is ordinarily from 0.1 to 0.2 cm.

The periphery of the insert 5 is formed by peripheral sides joining the upper and lower surfaces. These sides generally form either a circle or a convex regular polygon (in this last instance, each separate side is desirably essentially rectangular in appearance). The sides of neutral cutting inserts are parallel to an axis normal to the planar surfaces. However, the sides of positive cutting inserts have a relief angle, as shown in composite 5. Therefore, each separate side is trapezoidal in configuration.

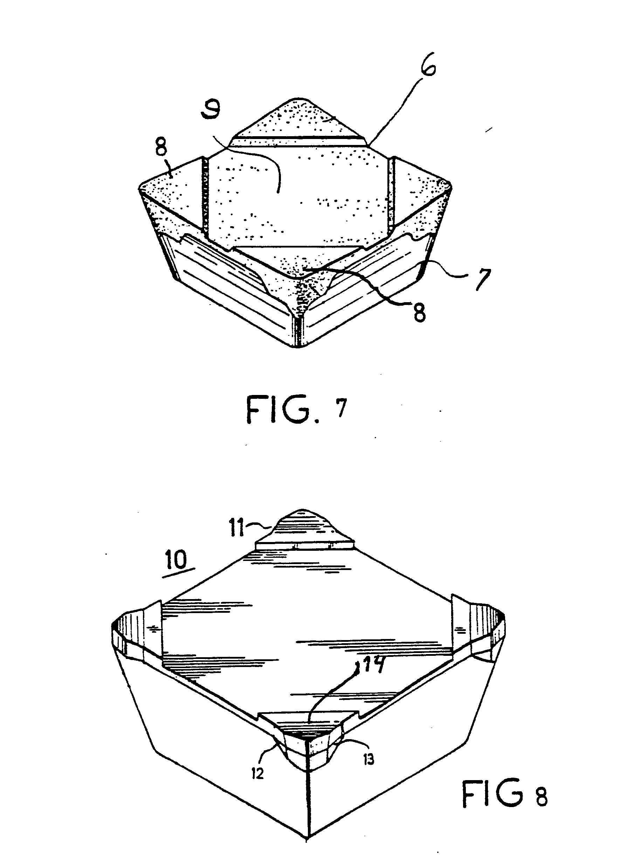

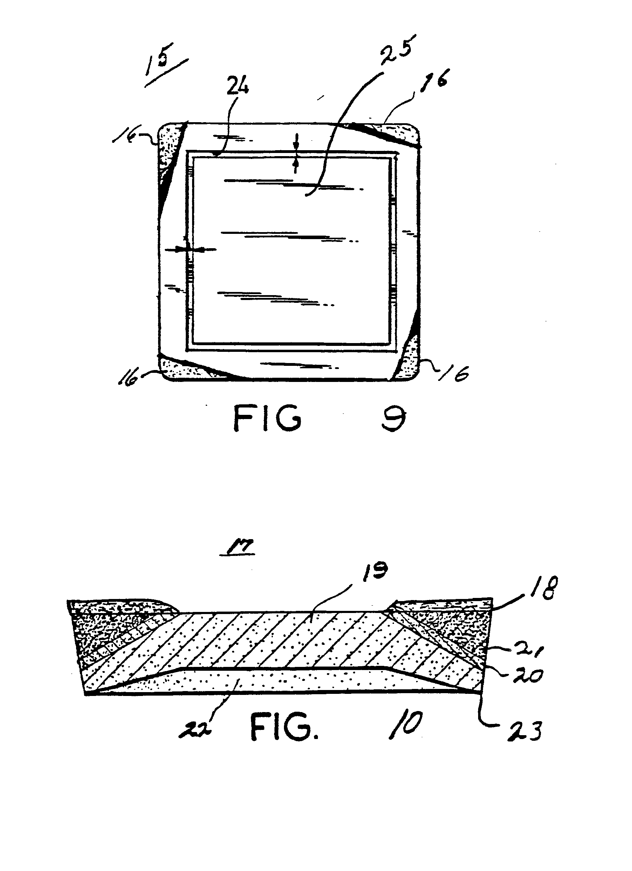

The insert 5 of Fig. 6 clearly shows a ring-like concentration of hard crystals 2 and a central section 4 with few, if any, hard crystals. The cross section of the ring structure 2 is preferably of a triangular configuration. The ring structure 2 may also have an upper hard crystal disc surface which coextensively covers the total top surface of the insert 5 somewhat similar to the surface 6 as shown in Fig. 7. This top surface 6 may be so formed that, in a polygon structure 7 such as illustrated in Fig. 7, there are formed, discrete triangular edge structures 8 which are elevated above the central section 9 to provide a bilevel effect. By this means most of the hard crystals are concentrated in a strengthening arrangement in cutting edge structures. The edge structures 8 may also project laterally and forwardly from the insert as shown in Figs. 7 and 8 where, in Fig. 8 for example, an insert 10 includes hard crystal edge structures 11 having surfaces 12, 13 and 14 which project laterally and forwardly as well as upwardly as shown. Moreover, since the actual relationship of the cutting edge structure of a polygon insert to a workpiece is not symmetrical, i.e. that more of one side of the cutting edge is presented to the workpiece than the other side, the edge structure may be formed in a complementary manner. The polygon insert 15 of Fig. 9 shows nonsymmetrical hard crystal cutting edge structures 16 of a generally triangular configuration having one longer side for presentation to the workpiece. Rectangular structures may also be employed in the same manner. These projections minimize subsequent grinding operations.

As described, the process of this invention may be employed to control, disperse, or concentrate the crystal structures of this invention in predetermined areas. The highly concentrated edge crystal structures become, in fact, inserts in insert matrix. In order to provide a better bond between the edge structures and the matrix, to keep the quantity of hard crystals at a minimum, and to increase toughness of the total insert, a supporting crystal layer may be employed as shown in Fig. 10 in the cross section of insert 17. As illustrated, a cutting edge structure 18 is spaced from the matrix 19 by a layer 20 of hard crystals whose concentration is less than the crystals in the edge structure 18. This layer 20 provides for a gradation in stresses in the insert and may be stratified as shown or may be a continuing varying concentration either separately or as a part of edge structure 18. Also, as shown in Fig. 10, the edge structure 18 may be formed with a rake angle at the sides 21 to minimize subsequent grinding.

In the compacting process of this invention there is a different force required to compact the hard crystal edge structure 18 and the matrix portion 19. These pressures may be equalized by having the press anvil of a convex section so that the insert has its central and more compressible section 22 compressed further into a thinner section at the time when the crystal edge structure see their maximum compression force. This thinner section provides a rim like lower surface 23 which assists in clamping the insert in a tool holder.

The process of this invention by permitting the preforming of bilevel area, rim structures and recesses provides for unique retention arrangements in tool holders. For brazing process, an easily brazeable material such as a cobalt compound or metal is provided as a base layer for the insert which, when sintered, provides a metallic base layer for brazing.

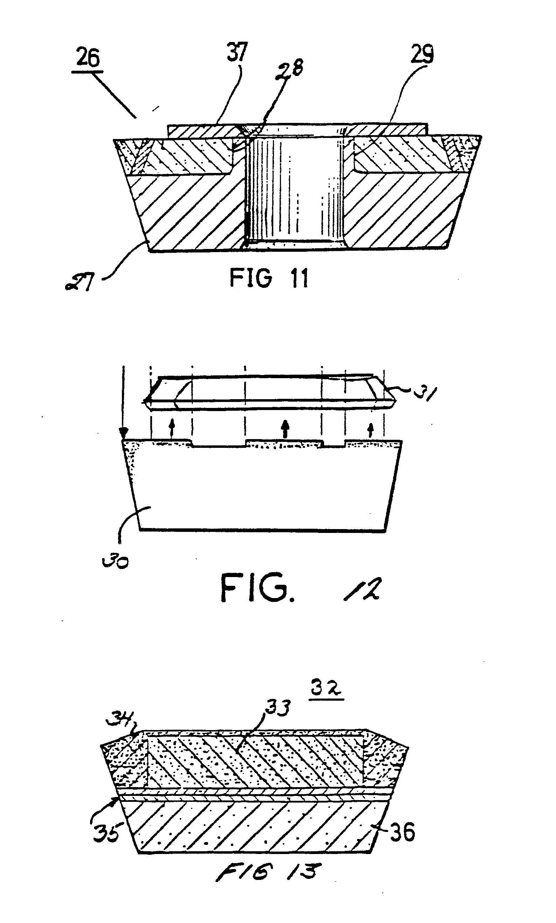

For mechanical locking means, a preformed recess 24 in Fig. 9 contains a plate or washer 25 of a relatively soft material such as copper which is bonded to the insert 15. The upper surface of plate 25 extends higher than the upper surface of the hard crystal edge structure 16 and serves to absorb clamping forces on the insert. Where the insert is made in a very thin cross section, such as the insert 26 in Fig. 11 it may be protectively mounted by utilizing an annular block member 27 with an upstanding nipple 28. The insert 26 is provided with an aperture 29 and is positioned with a close fit over nipple 28. At the same time a hard metal washer 37 rests on the insert 26 as well as on the front edge of nipple 28, and a pin member, such as a screw, clamp the washer to the front edge of the nipple, and the block to a tool holder. In this manner excess stress is carried by the nipple and block rather than the insert.

Where stresses may be excessive, the structure of Fig. 12 may be employed. In Fig. 12 the insert 30, which may be those of Figs. 8 and 9 for example, includes a shock absorber block 31 of a hard metal. This block is smaller than the insert and its perimeter rests on all the cutting edge structures. A clamping force on this block distributes the stresses to all the inserts.

Because of the layer concept of this process various additional shapes may be produced such as annular inserts with cutting edges located on any surface, and drawing dies having an inner cutting edge.

With regard to clamping and general dimensional stability of an insert, the insert exemplified by Fig. 13 may be employed. In Fig. 13 the insert 32 includes a central matrix 33 which is prepressed to provide structural and dimensional stability. Thereafter, a layer or envelope of super hard crystal 34 is compaction of eventually only the crystal material. The composite is then sintered in the usual manner. Metallic layers 35 serve to bond the insert to a base 36.

## Claims

1. A process for preparing a bonded composite cutting element comprising

   (a) forming a compact which comprises superhard crystals and non-diamond carbon,

   (b) infiltrating said compact with liquid silicon, and

   (c) sintering the compact containing infiltrated silicon under conditions sufficient to produce a $\beta$-silicon carbide binder uniting said composite, characterized in that said compact is prepared by

   (i) forming a first dispersion (1) of superhard crystals and carbon black in paraffin;

   (ii) forming a second dispersion of carbon fiber, carbon black and filler in paraffin;

   (iii) compacting one of said dispersions (1) to produce a physically stable intermediate compact (2);

   (iv) recompacting said intermediate compact with the remaining dispersion to produce a binary compact (2, 4);

   (v) subjecting said binary compact to a vacuum for a period of time at a temperature sufficient to vaporize essentially all of said paraffin;

   (vi) infiltrating said compact with liquid silicon;

   (vii) sintering the compact; and then

   (viii) subjecting the sintered compact to a nitriding treatment to convert elemental silicon to silicon nitride.

2. The process of Claim 1 wherein nitrogen in gaseous form is introduced into the sintering process.

3. A cutting tool insert (5) made by the processes of Claim 1.

4. The insert of claim 3 where the insert includes a layer (6) of superhard crystals on an upper surface and a number of concentrated volumes (8) of superhard crystals project from said layer.

5. The insert of claim 3 wherein the superhard crystals are concentrated in a rim portion (2) about a central section (4) where the rim portion has a thickness less than the thickness of the insert.

6. The insert of claim 3 where the superhard crystals are concentrated in a number of cutting edge structures (11).

7. The insert of claim 3 wherein the cutting edge structures (18) include an underlayer (20) of more dispersed crystals.

8. The insert of claim 6 wherein the edge structures (11) are projecting from the insert.

9. The insert of claim 6 wherein the projection is laterally forwardly and upwardly from the matrix.

10. The insert of claim 6 wherein said insert (15) has a preformed recess (24) in its top or bottom surface or both.

## Patentansprüche

1. Verfahren zum Herstellen eines gebundenen Verbund - Schneidelementes durch

(a) Herstellen eines Preßlings, der überharte Kristalle und nicht-diamantartigen Kohlenstoff umfaßt,

(b) Infiltrieren des Preßlings mit flüssigem Silizum und

(c) Sintern des das infiltrierte Silizium enthaltenden Preßlings unter Bedingungen, die ausreichen, β-Siliziumkarbid - Binder zu erzeugen, der das Verbundmaterial verbindet, dadurch gekennzeichnet, daß der Preßling hergestellt wird durch:

(i) Bilden einer ersten Dispersion (1) aus überharten Kristallen und Ruß in Paraffin,

(ii) Bilden einer zweiten Dispersion aus Kohlenstofffaser, Ruß und Füllstoff in Paraffin,

(iii) Pressen einer der Dispersionen (1) unter Bildung eines physisch stabilen Zwischenpreßlings (2),

(iv) nochmaliges Pressen des Zwischenpreßblings mit der übrigen Dispersion zur Herstellung eines Binärpreßlings (2,4),

(v) Unterwerfen des Binärpreßlings gegenüber einem Vakuum für eine Zeitdauer bei einer Temperatur, die ausreicht, im wesentlichen das gesamte Paraffin zu verdampfen,

(vi) Infiltrieren des Preßlings mit dem flüssigen Silizium,

(vii) Sintern des Preßlings und dann

(viii) Unterwerfen des gesinterten Preßlings einer nitrierenden Behandlung, um elementares Silizium in Siliziumnitrid umzuwandeln.

2. Verfahren nach Anspruch 1, dadurch gekennzeichnet, daß Stickstoff in gasförmiger Form beim Sinterverfahren eingeführt wird.

3. Schneidgerät-Einsatz (5), hergestellt nach dem Verfahren gemäß Anspruch 1.

4. Einsatz nach Anspruch 3, dadurch gekennzeichnet, daß der Einsatz eine Schicht (6) aus überharten Kristallen auf einer oberen Oberfläche und eine Anzahl konzentrierter Volumina (8) aus überharten Kristallen aufweist, die aus dieser Schicht hervorstehen.

5. Einsatz nach Anspruch 3, dadurch gekennzeichnet, daß die überharten Kristalle in einem Randteil (2) über einen zentralen Abschnitt (4) konzentriert sind, wobei der Randabschnitt eine Dicke hat, die geringer als die Dicke des Einsatzes ist.

6. Einsatz nach Anspruch 3, dadurch gekennzeichnet, daß die überharten Kristalle in einer Anzahl von Schneid-kanten-Strukturen (11) konzentriert sind.

7. Einsatz nach Anspruch 3, dadurch gekennzeichnet, daß die Schneidkanten-Strukturen (18) eine Unterschicht (20) aus dispergierteren Kristallen aufweisen.

8. Einsatz nach Anspruch 6, dadurch gekennzeichnet, daß die Kanten-Strukturen (11) vom Einsatz hervorragen.

9. Einsatz nach Anspruch 6, dadurch gekennzeichnet, daß der Vorsprung sich von der Matrix aus seitlich nach vorn und nach oben erstreckt.

10. Einsatz nach Anspruch 6, dadurch gekennzeichnet, daß der Einsatz (15) eine vorgeformte Ausnehmung (24) in seiner oberen oder Bodenoberfläche oder in beiden aufweist.

**Revendications**

1. Procédé de préparation d'un élément de coupe composite lié consistant:

(a) à former un produit compact constitué de cristaux super-durs et de carbone non fourni par du diamant,

(b) à infiltrer ledit produit compact avec du silicium liquide, et

(c) à agglomérer le produit compact contenant le silicium infiltré dans des conditions suffisant à produire un liant formé de carbure de β-silicium unissant ledit composite, caractérisé en ce que la préparation dudit produit compact consiste:

(i) à former une première dispersion (1) de cristaux super-durs et de noir de carbone dans de la paraffine;

(ii) à former une seconde dispersion de fibres de carbone, de noir de carbone et de charge dans de la paraffine;

(iii) à compacter l'une desdites dispersions (1) pour produire un article compact intermédiaire (2) physiquement stable;

(iv) à recompacter ledit article compact intermédiaire avec la dispersion restante pour produire un article compact binaire (2, 4);

(v) à soumettre ledit article compact binaire à une dépression pendant une période de temps et une température suffisantes pour vaporiser essentiellement toute la paraffine;

(vi) à infiltrer ledit article compact avec du silicium liquide;

(vii) à agglomérer ledit compact, et ensuite

(viii) à soumettre ledit produit compact aggloméré à un traitement de nitruration pour convertir le silicium élémentaire en nitrure de silicium.

2. Procédé selon la revendication 1, caractérisé en ce que de l'azote sous forme gazeuse est introduit au cours du procédé d'agglomération.

3. Pièce rapportée (5) pour outil de coupe issue de la mise en oeuvre du procédé selon la revendication 1.

4. Pièce rapportée selon la revendication 3, caractérisée en ce qu'elle comprend une couche (6) de cristaux super-durs sur une surface supérieure et une série de volumes concentrés (8) de cristaux super-durs se projetant à partir de ladite couche.

5. Pièce rapportée selon la revendication 3, dans laquelle les cristaux super-durs sont concentrés dans une partie marginale (2) autour d'une zone centrale (4), la partie marginale ayant une épaisseur inférieure à l'épaisseur de la pièce rapportée.

6. Pièce rapportée selon la revendication 3, caractérisée en ce que les cristaux super-durs sont concentrés dans une série de structures d'arête de coupe (11).

7. Pièce rapportée selon la revendication 3, caractérisée en ce que les structures d'arête de coupe (18) comprennent une sous-couche (20) de cristaux plus dispersés.

8. Pièce rapportée selon la revendication 6, caractérisée en ce que les structures d'arête (11) se projettent à partir de la pièce rapportée.

9. Pièce rapportée (6) caractérisée en ce que la projection se fait latéralement, vers l'avant et vers le haut à partir de la matrice.

10. Pièce rapportée selon la revendication 6, caractérisée en ce que ladite pièce rapportée (15) a un évidement préformé (24) sur sa surface supérieure, inférieure ou sur les deux.

FIG. 1

FIG.2

FIG.3

FIG.4

FIG.5

FIG.6

FIG. 7

FIG 8

FIG 9

FIG. 10

FIG 11

FIG. 12

FIG 13